# EUROPEAN PATENT SPECIFICATION

(11) **EP 2 559 883 B1**
(45) Date of publication and mention of the grant of the patent: **01.04.2020**
(21) Application number: 12180731.7
(22) Date of filing: 16.08.2012
(51) Int. Cl.: F02C 7/32

(54) **Gas turbine engine gearbox mount**
Gasturbinenmotor-Getriebebefestigung
Fixation de la boîte d'engrenages de moteur à turbine à gaz

(30) Priority: 19.08.2011 US 201113213869
(43) Date of publication of application: 20.02.2013
(73) Proprietor: United Technologies Corporation, Farmington, CT 06032 (US)
(72) Inventor: Muldoon, Marc J., Marlborough, CT Connecticut 06447 (US)
(74) Representative: Dehns

(56) References cited:
- EP-A2- 1 013 911
- EP-A2- 1 473 441
- US-A- 5 303 880

## Description

### BACKGROUND OF THE INVENTION

### 1. Technical Field

The present invention relates to gas turbine engines, and more particularly to a mounting arrangement for a gearbox or other engine accessory to the engine to minimize damage to the accessory in the event of a high rotor imbalance condition such as in the case of a fan blade loss.

### 2. Background Information

Modern gas turbine aircraft engines have gearboxes and other accessories that are mounted on their external cases. The gearbox uses power from the engine to drive the major accessories needed for engine functions such as generators for electricity and pumps for circulating fluids such as lubricating oil. The accessories are frequently mounted on the gearbox.

The main gearbox of modern turbofan engines such as those used in powering aircraft, is often mounted within the engine core cowl and is driven by a towershaft from the engine's high-pressure compressor. The accessory drives for various components, such as the hydraulic pump, are mounted on the gearbox. The main gearbox drives the fuel pump, scavenge pump, the electrical generator for the electronic engine control, external deoiler, hydraulic pump, and the integrated drive generator (for aircraft electricity).

Various prior art mounting arrangements have been used to mount the gearbox to the external case. The gearbox has often been connected to the engine case at two or more locations along the length of the gearbox. For example, a forward link has been used to fasten the front of the gearbox to the engine. A plurality of side hanger links have been used on either side of the gearbox housing to stabilize the gearbox. Further, a mounting plate has also been used to fasten the gearbox housing to the engine case to provide alignment of the gearbox with respect to the engine case and prevent undesirable movement of the gearbox relative to the engine. Such hard mounts, that is, a connection which are essentially inflexible and immobile cause engine case deflections to be transmitted to the gearbox and impose undesirable loads on the mounting hardware and on the gearbox itself.

One problem caused by mounting the gearbox to the engine case is subjecting the gearbox and engine cases to high loads caused by rotor imbalances. Severe rotor imbalance can occur in an engine, particularly after a fan blade breaks off from the engine's rotor due to impact with foreign objects, such as birds, hailstones or other objects which may be ingested into the engine. Such blade loss produces an imbalance in the rotor and causes the rotor shaft to deflect. The more the rotor deflects, the greater is the radial load on the rotor bearing supports.

The rotor imbalance loads are transmitted from the bearing supports to the engine case and ultimately to the gearbox fastened to the engine case. If the vibratory loads are high, the gearbox or cases may not be able to sustain the imbalance loads resulting in the failure of the gearbox housing or case and often the liberation of accessories mounted on the gearbox.

When the gearbox housing breaks, oil from within the gearbox may splash over the hot engine and ignite, causing a fire. -If a fuel-bearing accessory breaks off from the gearbox or pulls apart, spilled fuel may also cause a fire. If the generator pulls off, it may potentially break through the engine cowling itself and ultimately damage an aircraft control surface.

Consequently, gearbox housings have been made thicker and the mount points thereon stronger. However, these prior art solutions have resulted in substantially heavier hardware which in turn has resulted in increased gearbox mount loads. In turn, the efficiency of the engine is adversely impacted by such heavier hardware.

It is also known to employ redundant fasteners such as pins in accessory mounts. In such prior art arrangements, a first break-away mount pin shears off under high load conditions such as the aforementioned fan blade loss situations. A second retention pin in the mount maintains the integrity of the mount and the retention of the gearbox on the engine case in a loose arrangement thereby reducing load transfer from the case to the gearbox. However, the use of such redundant pin arrangements necessarily increases the size of the gearbox mount to the extent that the mount may not fit within available packaging space.

Thus, the challenge for modern gas turbine engines, during high rotor imbalance events, is the limiting of damage to the gearbox mounts and the gearbox itself with a compact energy absorbing mount.

Prior art mounts are disclosed in EP 1473441 A2 and EP 1013911 A2.

### SUMMARY OF THE DISCLOSURE

A primary object of the present invention is to provide an accessory mounting arrangement that protects a gas turbine engine accessory gearbox from the undesirable effects of case deflections and distortions experienced during high rotor imbalance events such as in a fan blade loss event.

In accordance with the present invention, a gas turbine engine is provided in accordance with claim 1.

Deflections and distortions of the engine case due to abnormal operation of the engine such as during a high rotor imbalance condition due to, for example, the liberation of a fan blade from the engine's rotor, results in shearing of the fuse bushing to dissipate the energy associated with the case deflections and distortions and isolate the fastener, link and accessory from the case deflections and distortions while maintaining the connection of the link and bracket with the accessory and engine case to minimize the risk of damage thereto under such abnormal engine operating conditions. The frangible bushing eliminates the need for separate shear and retention fasteners to isolate the accessory from case distortions and deflections while maintaining the attachment of the accessory to the engine case, thereby representing a compact, effective energy absorbing mount for the accessory which is uncomplicated, cost-effective and compact enough to fit in minimal space allocated for such mounts in modern gas turbine engines.

The foregoing and other objects, features and advantages of the present invention will become more apparent in the following detailed description of the best mode for carrying out the invention and from the accompanying drawings which illustrate an embodiment thereof.

### BRIEF DESCRIPTION OF THE DRAWINGS

FIG. 1 is a perspective view of a typical axial flow turbofan gas turbine engine showing a gearbox mounted to the engine's external case.
FIG. 2 is a perspective view of the gas turbine engine of FIG. 1 with an enlarged view of the gearbox.
FIG. 3 is a sectional elevation of a gas turbine engine accessory gearbox mount of the present invention.
FIG. 4 is a side elevation of a gas turbine engine accessory gearbox mount of the present invention.

### DETAILED DESCRIPTION OF THE INVENTION

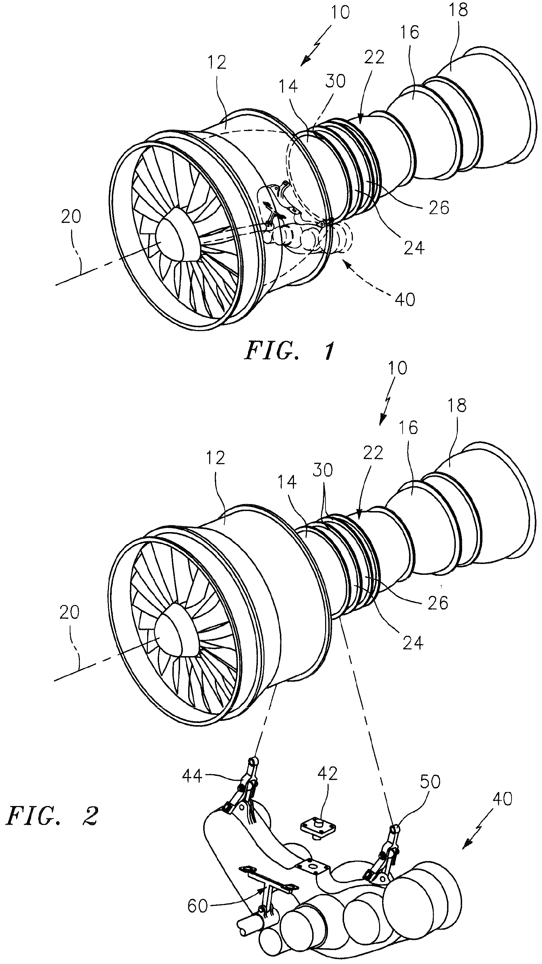

Referring to FIG. 1, a gas turbine engine 10 includes as its principal components, a fan section 12, a compression section 14, a combustion section 16 and a turbine section 18. The compression and turbine sections each contain one or more compressor and turbine stages (not shown) which rotate about a central rotational axis 20. The principal components are circumscribed by an essentially cylindrical external case 22 which serves as a main structural support for the engine. The external case is typically constructed of individual annular case elements, such as elements 24 and 26, which are joined together at a bolted flange connection such as at flange 30. A gearbox 40 is mounted to the external case 22.

Referring to FIG. 2, the gearbox 40 is mounted to the external case by a rigid mount 42 and a plurality of energy absorbing mounts 50 in accordance with the present invention.

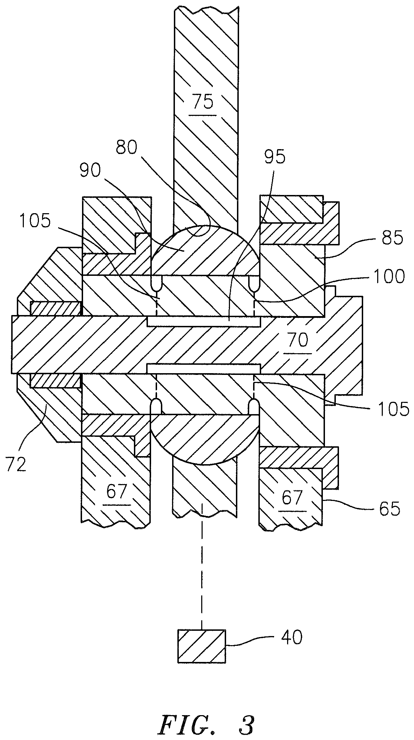

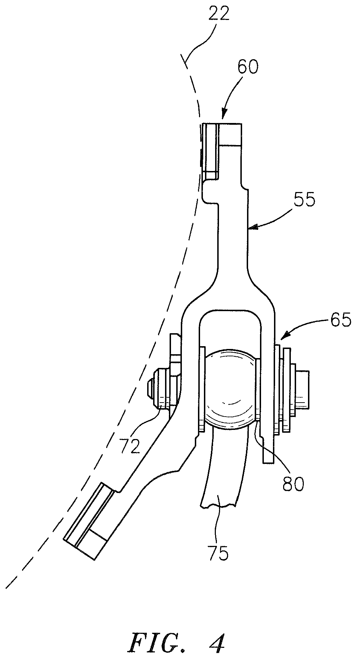

Referring to FIGS. 3 and 4, the accessory gearbox mount of the present invention comprises a rigid bracket 55 having first and second ends 60 and 65. First end 60 is adapted for mounting to engine case 22. To this end, first end 60 may be apertured to receive a suitable mounting fastener such as a bolt (not shown) which engages bracket 55 and case 22. Second end 65 of bracket 55 comprises a clevis having a pair of generally parallel legs 67 apertured to receive a retainer fastener pin 70 therethrough.

The accessory gearbox mount of the present invention also comprises a link 75 apertured at end 80 thereof. Link aperture 80 is aligned with the apertures in clevis 65, the aligned apertures receiving retainer pin 70 therethrough. A fuse bushing 85 surrounds retainer pin 70 and is received within the apertures in end 80 of link 75 and in clevis 65. As best seen in FIG. 3, the end of link 75 within clevis 65 terminates at a spherical bearing 90 which accommodates any axial misalignments between link 75 and bracket 55. As best seen in FIG. 3, spherical bearing 90 is apertured to receive retainer pin 70 and fuse bushing 85 therethrough, the aperture in spherical bearing 90 being aligned with the apertures in link 75 and clevis 65. An elastomer bushing 95 formed from a material such as high temperature resistant, synthetic rubber, surrounds retainer pin 70 between retainer pin 70 and fuse bushing 85 within the interior of spherical bearing 90.

Retainer pin 70 is secured to bracket 65 by a nut 72 threaded on to the end of the pin.

In operation, in the event of a large scale rotor imbalance, due to, for example, separation of a fan blade from the engine's rotor, engine case 22 will experience exaggerated deflections and distortions due to radial movement of the engine's rotor bearings within case 22. These deflections and distortions will cause movement of bracket 55 with the case. Such movement of bracket 55 will cause a shearing of fuse bushing 85 at locations 100 and 105 as bracket 55 moves with respect to link 75 (see FIG. 3). The shearing of fuse bushing 85 absorbs the energy associated with the case distortions and deflections and isolates the movement of bracket 55 from pin 70 and spherical bearing 90, thereby isolating gearbox 40 from such movement. However, since fuse bushing 85 shears, retainer pin 70 continues to provide firm retention of link 75 and thus gearbox 40 on case 22 without the requirement of a separate shearing fastener pin as was employed in prior art arrangements as discussed hereinabove.

While a specific embodiment of the present invention has been shown and described herein, it will be understood that various modifications of this embodiment may suggest themselves to those skilled in the art. While specific geometries of the various components employed in the accessory gearbox mount of the present invention have been shown and described, it will be appreciated that various modifications to these geometries may be employed without departure from the present invention. Accordingly, it will be understood that these and various other modifications of the preferred embodiment of the present invention as illustrated and described herein may be implemented without departing from the present invention and is intended by the appended claims to cover these and any other such modifications which fall within the scope of the invention herein.

## Claims

1. A gas turbine engine (10) comprising a case (22) having an exterior surface, an accessory gearbox (40), and a mount (50) attaching the accessory gearbox (40) to the exterior surface of the case (22) of the gas turbine engine (10), said mount (50) comprising:
a bracket (55) adapted for fixed attachment to said exterior surface of said engine case (22);
a link (75) adapted for connection to said accessory gearbox (40) and said mounting bracket (55);
said link (75) being connected to said mounting bracket (55) by a fastener (70) received within said link (75) and mounting bracket (55); **characterised in that**
said fastener (70) is disposed within a frangible fuse bushing (85) received within said link (75) and mounting bracket (55).

2. The gas turbine engine of claim 1, wherein said fastener (70) is received within apertures in said link (75) and mounting brackets (55) and said frangible fuse bushing (85) is received within said apertures.

3. The gas turbine engine of claim 1 or 2, wherein said mounting bracket (55) includes a clevis (65), said link (75) being connected to said mounting bracket (55) interiorly of said clevis (65).

4. The gas turbine engine of claim 3, wherein
said clevis (65) includes first and second generally parallel legs (67);
said fastener (70) being received within aligned apertures in said link (75) and clevis legs (67).

5. The gas turbine engine of claim 4, wherein said fastener (70) comprises an elongate pin.

6. The gas turbine engine of claim 3, 4 or 5, and further including a bearing (90) connected to said link (75) interiorly of said clevis (65), said bearing (90) accommodating misalignments of said link (75) with said mounting bracket (55).

7. The gas turbine engine of claim 6, wherein said bearing (90) comprises a spherical bearing.

8. The gas turbine engine of claim 7, wherein said spherical bearing (90) includes an aperture therethrough, said fastener (70) and said frangible bushing (85) being received within said spherical bearing aperture.

9. The gas turbine engine of any preceding claim and further including an elastomeric bushing (95) disposed between said fastener (70) and said frangible bushing (85), said elastomeric bushing (95) cushioning said fastener (70) from shock loads applied thereto by said shearing of said frangible fuse bushing (85).

10. The gas turbine engine of claim 9, wherein said elastomer is synthetic rubber.

11. The gas turbine engine of any preceding claim;
said bracket (55) having opposed ends, said bracket (55) being attached at a first end thereof to said case (22) at said outer surface thereof;
said link (75) having a pair of opposed ends, one of said link ends being attached to said accessory gearbox (40), the other of said link ends being connected to a second end of said bracket (55) by said fastener (70), said fastener (70) received within aligned apertures in said link (75) and mounting bracket (55); and
said frangible fuse bushing (85) received within said aligned apertures.

12. The gas turbine engine of claim 11, wherein said mounting bracket at said second end thereof includes a clevis (65), said fastener (70) being received within aligned apertures in said link (75) and clevis (65) whereby said link (75) is connected to said mounting bracket (55) interiorly of said clevis (65).

## Patentansprüche

1. Gasturbinenmotor (10), umfassend ein Gehäuse (22), das eine Außenfläche aufweist, ein Hilfsgerätegetriebe (40) und eine Befestigung (50), die das Hilfsgerätegetriebe (40) an der Außenfläche des Gehäuses (22) des Gasturbinenmotors (10) befestigt, wobei die Befestigung (50) Folgendes umfasst:
einen Bügel (55), der zur festen Anbringung an der Außenfläche des Motorgehäuses (22) ausgelegt ist;
ein Verbindungsstück (75), das zur Verbindung mit dem Hilfsgeräteantrieb (40) und dem Befestigungsbügel (55) ausgelegt ist;
wobei das Verbindungsstück (75) mit dem Befestigungsbügel (55) durch eine Halterung (70) verbunden ist, die innerhalb des Verbindungsstücks (75) und des Befestigungsbügels (55) aufgenommen ist; **dadurch gekennzeichnet, dass**
die Halterung (70) innerhalb einer zerbrechlichen Sicherungsbuchse (85) angeordnet ist, die innerhalb des Verbindungsstücks (75) und des Befestigungsbügels (55) aufgenommen ist.

2. Gasturbinenmotor nach Anspruch 1, wobei die Halterung (70) innerhalb von Öffnungen in dem Verbindungsstück (75) und den Befestigungsbügeln (55) aufgenommen ist und die zerbrechliche Sicherungsbuchse (85) innerhalb der Öffnungen aufgenommen ist.

3. Gasturbinenmotor nach Anspruch 1 oder 2, wobei der Befestigungsbügel (55) eine Gabel (65) beinhaltet, wobei das Verbindungsstück (75) mit dem Befestigungsbügel (55) im Inneren der Gabel (65) verbunden ist.

4. Gasturbinenmotor nach Anspruch 3, wobei
die Gabel (65) einen ersten und einen zweiten Schenkel (67), die im Allgemeinen parallel sind, beinhaltet;
die Halterung (70) innerhalb ausgerichteter Öffnungen in dem Verbindungsstück (75) und den Gabelschenkeln (67) aufgenommen ist.

5. Gasturbinenmotor nach Anspruch 4, wobei die Halterung (70) einen länglichen Stift umfasst.

6. Gasturbinenmotor nach Anspruch 3, 4 oder 5 und ferner umfassend ein Lager (90), das mit dem Verbindungsstück (75) im Inneren der Gabel (65) verbunden ist, wobei das Lager (90) Fehlausrichtungen des Verbindungsstücks (75) mit dem Befestigungsbügel (55) ausgleicht.

7. Gasturbinenmotor nach Anspruch 6, wobei das Lager (90) ein kugelförmiges Lager umfasst.

8. Gasturbinenmotor nach Anspruch 7, wobei das kugelförmige Lager (90) eine Öffnung dadurch beinhaltet, wobei die Halterung (70) und die zerbrechliche Buchse (85) innerhalb der Öffnung des kugelförmigen Lagers aufgenommen sind.

9. Gasturbinenmotor nach einem der vorstehenden Ansprüche und ferner umfassend eine elastomere Buchse (95), die zwischen der Halterung (70) und der zerbrechlichen Buchse (85) angeordnet ist, wobei die elastomere Buchse (95) die Halterung (70) gegenüber Stoßbelastungen darauf durch Scheren der zerbrechlichen Sicherungsbuchse (85) abfedert.

10. Gasturbinenmotor nach Anspruch 9, wobei das Elastomer synthetischer Kautschuk ist.

11. Gasturbinenmotor nach einem der vorstehenden Ansprüche;
wobei der Bügel (55) gegenüberliegende Enden aufweist, wobei der Bügel (55) an einem ersten Ende davon an dem Gehäuse (22) an der Außenfläche davon angebracht ist;
wobei das Verbindungsstück (75) ein Paar gegenüberliegender Enden aufweist, wobei eines der Verbindungsstückenden an dem Hilfsgerätegetriebe (40) angebracht ist, wobei das andere der Verbindungsstückenden mit einem zweiten Ende des Bügels (55) durch die Halterung (70) verbunden ist, wobei die Halterung (70) innerhalb ausgerichteter Öffnungen in dem Verbindungsstück (75) und dem Befestigungsbügel (55) aufgenommen ist; und
wobei die zerbrechliche Sicherungsbuchse (85) innerhalb der ausgerichteten Öffnungen aufgenommen ist.

12. Gasturbinenmotor nach Anspruch 11, wobei der Befestigungsbügel an dem zweiten Ende davon eine Gabel (65) beinhaltet, wobei die Halterung (70) innerhalb ausgerichteter Öffnungen in dem Verbindungsstück (75) und der Gabel (65) aufgenommen ist, wobei das Verbindungsstück (75) mit dem Befestigungsbügel (55) im Inneren der Gabel (65) verbunden ist.

## Revendications

1. Moteur à turbine à gaz (10) comprenant un carter (22) ayant une surface extérieure, un boîtier d'accessoires (40) et un bâti (50) fixant le boîtier d'accessoires (40) à la surface extérieure du carter (22) du moteur à turbine à gaz (10), ledit bâti (50) comprenant :
un support (55) adapté pour une fixation fixe à ladite surface extérieure dudit carter de moteur (22) ;
une bielle (75) adaptée pour une liaison audit boîtier d'accessoires (40) et audit support de fixation (55) ;
ladite bielle (75) étant reliée audit support de fixation (55) par une attache (70) reçue à l'intérieur de ladite bielle (75) et dudit support de fixation (55) ; **caractérisé en ce que** ladite attache (70) est disposée à l'intérieur d'une bague fusible frangible (85) reçue à l'intérieur de ladite bielle (75) et dudit support de fixation (55).

2. Moteur à turbine à gaz selon la revendication 1, dans lequel ladite attache (70) est reçue à l'intérieur d'ouvertures dans ladite bielle (75) et ledit support de fixation (55) et ladite bague fusible frangible (85) est reçue à l'intérieur desdites ouvertures.

3. Moteur à turbine à gaz selon la revendication 1 ou 2, dans lequel ledit support de fixation (55) inclut une chape (65), ladite bielle (75) étant reliée audit support de fixation (55) à l'intérieur de ladite chape (65).

4. Moteur à turbine à gaz selon la revendication 3, dans lequel
ladite chape (65) inclut des première et seconde pattes généralement parallèles (67) ;
ladite attache (70) étant reçue à l'intérieur d'ouvertures alignées dans ladite bielle (75) et lesdites pattes de chape (67).

5. Moteur à turbine à gaz selon la revendication 4, dans lequel ladite attache (70) comprend une broche allongée.

6. Moteur à turbine à gaz selon la revendication 3, 4 ou 5, et incluant en outre un palier (90) relié à ladite bielle (75) à l'intérieur de ladite chape (65), ledit palier (90) s'adaptant à des désalignements de ladite bielle (75) avec ledit support de fixation (55).

7. Moteur à turbine à gaz selon la revendication 6, dans lequel ledit palier (90) comprend un palier à rotule.

8. Moteur à turbine à gaz selon la revendication 7, dans lequel ledit palier à rotule (90) inclut une ouverture à travers lui, ladite attache (70) et ladite bague frangible (85) étant reçues à l'intérieur de ladite ouverture de palier à rotule.

9. Moteur à turbine à gaz selon une quelconque revendication précédente et incluant en outre une bague élastomère (95) disposé entre ladite attache (70) et ladite bague frangible (85), ladite bague élastomère (95) protégeant ladite attache (70) des charges d'impact qui lui sont appliquées par ledit cisaillement de ladite bague fusible frangible (85).

10. Moteur à turbine à gaz selon la revendication 9, dans lequel ledit élastomère est du caoutchouc synthétique.

11. Moteur à turbine à gaz selon une quelconque revendication précédente ;
Ledit support (55) ayant des extrémités opposées, ledit support (55) étant fixé à une première extrémité de celui-ci audit carter (22) au niveau de ladite surface externe de celui-ci ;
ladite bielle (75) ayant une paire d'extrémités opposées, l'une desdites extrémités de bielle étant fixée audit boîtier d'accessoires (40), l'autre desdites extrémités de bielles étant reliée à une seconde extrémité dudit support (55) par ladite attache (70), ladite attache (70) étant reçue à l'intérieur des ouvertures alignées dans ladite bielle (75) et le support de fixation (55) ; et
ladite bague fusible frangible (85) étant reçue à l'intérieur desdites ouvertures alignées.

12. Moteur à turbine à gaz selon la revendication 11, dans lequel ledit support de fixation au niveau de ladite seconde extrémité de celle-ci inclut une chape (65), ladite attache (70) étant reçue à l'intérieur des ouvertures alignées dans ladite bielle (75) et ladite chape (65) moyennant quoi ladite bielle (75) est reliée audit support de fixation (55) à l'intérieur de ladite chape (65).
